(19) **Europäisches Patentamt / European Patent Office / Office européen des brevets**

(11) **EP 2 884 226 B1**

(12) **FASCICULE DE BREVET EUROPEEN**

(45) Date de publication et mention
de la délivrance du brevet:
**06.06.2018 Bulletin 2018/23**

(51) Int Cl.:
**G01B 11/00** (2006.01)　　　**B60R 1/00** (2006.01)
**H04N 17/00** (2006.01)

(21) Numéro de dépôt: **14196511.1**

(22) Date de dépôt: **05.12.2014**

(54) **Procédé de calibration angulaire de la position d'une caméra video embarquée dans un véhicule automobile**

Verfahren zur Winkelkalibrierung der Position einer Videokamera an Bord eines Kraftfahrzeugs

Method for angle calibration of the position of a video camera on board an automotive vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2013 FR 1362390**

(43) Date de publication de la demande:
**17.06.2015 Bulletin 2015/25**

(73) Titulaire: **PARROT AUTOMOTIVE**
**75010 Paris (FR)**

(72) Inventeur: **Chevalley, Laure**
**75014 PARIS (FR)**

(74) Mandataire: **Dupuis-Latour, Dominique**
**Bardehle Pagenberg**
**SO Square Opéra**
**5,rue Boudreau**
**75009 Paris (FR)**

(56) Documents cités:
**FR-A1- 2 874 300　　US-A1- 2009 290 032**
**US-A1- 2011 228 101**

## Description

L'invention concerne la calibration angulaire de la position d'une caméra embarquée dans un véhicule, notamment d'un véhicule automobile.

Elle s'applique en particulier à la calibration initiale d'un système d'aide à la conduite installé aussi bien en usine, "en première monte", sans banc de calibration spécifique qu'en "deuxième monte" par un utilisateur sur son véhicule. Un autre exemple de situation où une calibration de l'orientation de la caméra est nécessaire est l'utilisation d'une application pour *smartphone* qui utilise l'image captée par la caméra de ce *smartphone* monté sur un support fixé au tableau de bord ou sur le pare-brise du véhicule.

On connaît de nombreux systèmes d'assistance à la conduite mettant en oeuvre l'image captée par une caméra fixée dans le véhicule et qui "regarde" la route. Des algorithmes permettent de réaliser diverses fonctions telles que : détection des sorties de route, estimation de la distance avec les autres véhicules, alerte anticollision, détection d'obstacle, etc.

Pour toutes ces applications, il est nécessaire de connaitre précisément la position et l'orientation de la caméra par rapport au véhicule.

Dans toutes ces situations, le montage de la caméra peut être très approximatif, ce qui nécessite des corrections importantes à appliquer au signal délivré par la caméra avant de pouvoir analyser convenablement celui-ci. Il peut être également nécessaire de procéder à un réajustement ultérieur des paramètres de calibration, par exemple pour compenser les déformations que l'installation peut subir.

L'installation d'une caméra à un endroit précis est difficile du fait de la diversité des modèles de véhicules et des contraintes techniques. S'il est relativement simple de déterminer la position de la caméra dans le véhicule en termes de degrés de liberté en translation (mesure de la distance entre le point focal de la caméra et le centre du véhicule ou le niveau du sol) il est en revanche beaucoup plus difficile de mesurer précisément l'orientation de la caméra par rapport à celle du véhicule en termes de degrés de liberté en rotation, c'est-à-dire de déterminer l'écart angulaire entre l'axe optique de la caméra et l'axe longitudinal du véhicule.

Le but de l'invention est de proposer une méthode de calibration automatique de l'orientation d'une caméra embarquée dans un véhicule, avec une caméra dont les paramètres intrinsèques (longueur focale, résolution, distorsion) sont connus, mais dont l'orientation relative par rapport au véhicule n'est pas connue.

Comme on le verra, cette méthode ne nécessite aucune intervention du conducteur et elle est mise en oeuvre directement à partir de l'image de la scène captée par la caméra lorsque le véhicule roule normalement. On verra également que cette méthode est applicable aussi bien à une caméra située à l'avant du véhicule qu'à l'arrière de celui-ci, par exemple pour une caméra de recul ou d'estimation de la distance avec le véhicule qui suit le véhicule équipé.

La calibration angulaire consiste à évaluer une rotation (pouvant être exprimée sous forme matricielle) entre un repère de coordonnées lié à la caméra et un repère de coordonnées lié au véhicule.

Cette rotation peut être décomposée en trois rotations élémentaires définies respectivement par des angles de tangage, de roulis et de lacet. Une estimation complète de la rotation entre la caméra et le véhicule nécessite donc de déterminer ces trois angles.

De nombreuses méthodes de calibration angulaire ont déjà été proposées.

Parmi ces méthodes, un certain nombre d'entre elles permettent d'estimer complètement la rotation entre la caméra et le véhicule, mais nécessitent une intervention humaine et/ou une étape préalable, par exemple du fait du recours à une grille spécifique fixée au système, à des cibles en damier posées au sol ou contre un mur, ou à des marqueurs fixés sur le capot du véhicule et visibles par la caméra.

Les autres méthodes, qui n'utilisent pas d'élément extérieur et ne nécessitent aucune intervention humaine, n'ont jusqu'à présent permis qu'une calibration partielle, tous les degrés de liberté de la rotation (en tangage, en roulis et en lacet) ne pouvant être estimés ensemble.

En particulier, de nombreuses méthodes ont été proposées pour estimer les rotations en tangage et en lacet, notamment en analysant la position de l'horizon et/ou du point de fuite dans l'image de la scène captée par la caméra, comme décrit par exemple dans le FR 2 874 300 A1.

Mais ces techniques ne permettent d'estimer automatiquement que les angles de tangage et de lacet entre la caméra et le véhicule, pas l'angle de roulis.

D'autres méthodes, telles que celles proposées par exemple par les US 2011/0228181 A1 et US 2009/0290032 A1, sont basées sur l'identification de points d'intérêt ("*feature areas*") situés sur le sol, qui sont des points quelconques mais que l'on doit impérativement pouvoir retrouver d'une image à la suivante. Il est de ce fait nécessaire de disposer d'une séquence continue d'images, et de mettre en oeuvre un algorithme complexe permettant d'identifier de manière fiable le "même" point d'intérêt dans deux images proches de manière à pouvoir suivre les déplacements de ce point d'une image à l'image immédiatement suivante.

On mentionnera seulement en passant les techniques impliquant des paires de caméras, qui produisent une représentation stéréoscopique de la scène. Il est beaucoup plus simple de calibrer la position d'une paire de caméras, mais les techniques mises en oeuvre ne sont pas transposables à une caméra unique, comme dans le cas présent.

La présente invention a pour but de résoudre les problèmes précités, en proposant une technique de calibration angulaire complète - c'est-à-dire selon les trois degrés de liberté en tangage, roulis et lacet - de l'orientation d'une caméra (unique) embarquée dans un véhicule, ceci de façon entièrement automatique pendant une phase de conduite sur route et sans intervention de l'utilisateur ni recours à un quelconque marqueur ou cible lors d'une phase préalable.

Un autre but de l'invention est de pouvoir disposer d'une telle technique de calibration qui ne nécessite pour sa mise en oeuvre ni séquence d'images continue ni algorithme complexe de détection et de suivi de points d'intérêt dans deux images proches.

L'idée de base de l'invention consiste, lorsque le véhicule roule, à capter les images des marquages au sol délimitant les voies de circulation sur la route, et par un processus itératif estimer complètement l'orientation de la caméra par rapport au véhicule à partir de la position de deux voies situées côte-à-côte dans l'image, par exemple la largeur de la voie centrale (celle sur laquelle roule le véhicule) et la largeur de la voie à gauche et/ou à droite de celle-ci.

En particulier, comme on le verra plus loin, la détection des "bords" doit être entendue comme une détection des lignes formées par les bordures de la route et/ou par les séparateurs des voies de circulation (lignes blanches continues ou interrompues), détection qui peut être réalisée par un algorithme très simple qui ne nécessite pas d'identifier, reconnaître et suivre les "mêmes" points au sol d'une image à la suivante. Une fois opérée l'étape de reconnaissance de ces lignes, très peu de calculs sont nécessaires pour la calibration et il n'est pas nécessaire de disposer de points d'intérêt supplémentaires.

Un autre avantage est que la calibration selon l'invention peut être obtenue même si l'on ne dispose pas d'une séquence d'images continue ni algorithme complexe de détection et de suivi de points d'intérêt dans deux images proches. L'invention peut notamment être mise en oeuvre à partir d'images qui ne sont pas consécutives, par exemple enregistrées dans des endroits différents.

De surcroit, l'invention ne nécessite pas de connaître précisément la hauteur du véhicule ni la largeur des voies. Seules des quantités approchées sont utilisées pour initialiser ces valeurs, qui seront estimées par l'algorithme.

Plus précisément, l'invention propose un procédé du type général divulgué par le FR 2 874 300 A1 précité, c'est-à-dire comprenant, pendant une phase de déplacement du véhicule sur une route, des étapes de :

   a) capture d'une séquence d'images video d'une scène de la route, chaque image de la séquence comprenant une pluralité de traces d'intérêt représentatives de marquages au sol de voies de circulation parallèles ; et

   b) détection de bords dans les images video, pour l'obtention d'une liste de bords rectilignes correspondant, dans chaque image, auxdites traces d'intérêt.

   c) correction de la liste de bords par application à chaque bord d'une rotation selon l'estimée de la matrice de calibration ;

   d) calcul d'angles de tangage et de lacet résiduels par une méthode de détection du point de fuite appliqué à la liste de bords corrigée obtenue à l'étape c) ;

   e) mise à jour de l'estimée de la matrice de calibration par application d'une rotation selon les angles de tangage et de lacet résiduels calculés à l'étape d) ;

De façon caractéristique de l'invention, ce procédé comprend en outre les étapes successives suivantes :

   f) calcul d'un angle de roulis résiduel à partir de la liste de bords corrigée obtenue à l'étape c) et de l'estimée de la matrice de calibration obtenue à l'étape e), par :

   • estimation des largeurs respectives d'au moins deux voies de circulation à partir de la liste de bords ;
   • comparaison des largeurs respectives ainsi estimées et calcul d'au moins une différence de largeur entre voies ; et
   • calcul de l'angle de roulis en fonction de ladite différence de largeur ainsi calculée, les largeurs réelles des voies étant supposées identiques ;

   g) mise à jour de l'estimée de la matrice de calibration par application d'une rotation selon l'angle de roulis résiduel calculé à l'étape f) ; et

   h) itération, sur au moins une séquence d'images, des étapes c) à g) jusqu'à ce que les angles de tangage, de lacet et de roulis résiduels soient inférieurs à un seuil prédéterminé.

Très avantageusement, l'étape f) d'estimation de l'angle de roulis comprend les étapes successives suivantes :

   f1) correction de la liste de bords par application à chaque bord d'une rotation selon l'estimée de la matrice de calibration et d'une rotation selon l'estimée d'une matrice de roulis ;

f2) pour chaque image, à partir de la liste de bords obtenue à l'étape f1) et en fonction d'une référence de largeur de voie :

- calcul de la largeur de chacune des voies de circulation détectée dans l'image, et
- calcul d'un angle de roulis résiduel pour chaque couple de voies de circulation détecté dans l'image ;

f3) pour la séquence d'images, calcul d'une largeur moyenne en fonction des largeurs de voie estimées à l'étape f2) pour les différentes images de la séquence ;

f4) pour la séquence d'images, calcul d'un angle de roulis résiduel moyen à partir des angles de roulis résiduels calculés à l'étape f2) pour les différentes images de la séquence ;

f5) mise à jour :

- de la matrice de roulis par application d'une rotation selon l'angle de roulis résiduel moyen calculé à l'étape f4), et
- de la largeur de référence moyenne par la largeur moyenne calculée à l'étape f3) ;

f6) itération des étapes f1) à f5) jusqu'à ce que l'angle de roulis résiduel soit inférieur à un seuil prédéterminé ; et

f7) extraction d'un angle de roulis estimé à partir de la matrice de roulis.

Dans une forme de mise en oeuvre préférentielle, l'étape f2) de calcul de la largeur de chacune des voies de circulation et de l'angle de roulis pour chaque couple de voies de circulation comprend :

- en cas de détection dans l'image courante de plus de deux voies de circulation, la délivrance en sortie de trois valeurs de largeur de voie et de deux valeurs d'angle de roulis résiduel ;
- en cas de détection dans l'image courante de deux voies de circulation, la délivrance en sortie seulement de deux valeurs de largeur de voie et d'une valeur d'angle de roulis ;
- en cas de détection dans l'image courante d'une seule voie de circulation, la délivrance en sortie seulement d'une valeur de largeur de voie.

L'estimation de la largeur de chacune des voies de circulation peut notamment comprendre l'application de la relation :

$$\tilde{w} = H_v \cos(\alpha)(a_2 - a_1)$$

$\tilde{W}$ étant l'estimée de la largeur de la voie,
$H_v$ étant la hauteur de la caméra par rapport au sol,
$\alpha$ étant l'angle du véhicule par rapport à l'axe de la voie sur lequel il circule, et
$a_1$ et $a_2$ étant les coefficients directeurs des bords délimitant la voie de circulation dans l'image.

À l'étape f2) l'estimation de l'angle de roulis peut comprendre l'application de la relation :

$$a_z \simeq \left(-1 \pm \sqrt{1 + \frac{W}{\tilde{w}_g} - \frac{W}{\tilde{w}_m}}\right) \times \frac{\cos(\alpha) H_v}{W}$$

$W$ étant la référence de largeur de voie ou son estimation,
$\tilde{W}_g$ et $\tilde{W}_m$ étant les estimées de largeur de voies du couple de voies considéré,
$\alpha$ étant l'angle du véhicule par rapport à l'axe de la voie sur lequel il circule, et
$H_v$ étant la hauteur de la caméra par rapport au sol.

On va maintenant décrire un exemple de mise en oeuvre de l'invention, en référence aux dessins annexés où les mêmes références désignent d'une figure à l'autre des éléments identiques ou fonctionnellement semblables.

La Figure 1 est une représentation schématique d'un véhicule équipé d'une caméra frontale, montrant les repères de coordonnées respectifs impliqués dans le procédé de calibration de l'invention.
La Figure 2 est un exemple de scène captée par la caméra, montrant les marquages au sol délimitant les voies de circulation, ainsi que la géométrie des droites correspondant à cette représentation.

La Figure 3 est un schéma général par blocs fonctionnels, explicitant le mode opératoire du procédé de calibration de l'invention.

La Figure 4 est un schéma par blocs fonctionnels détaillant l'algorithme d'estimation du roulis du schéma de la Figure 3.

La Figure 5 est un schéma par blocs fonctionnels détaillant l'algorithme d'analyse de la largeur des voies du schéma de la Figure 4.

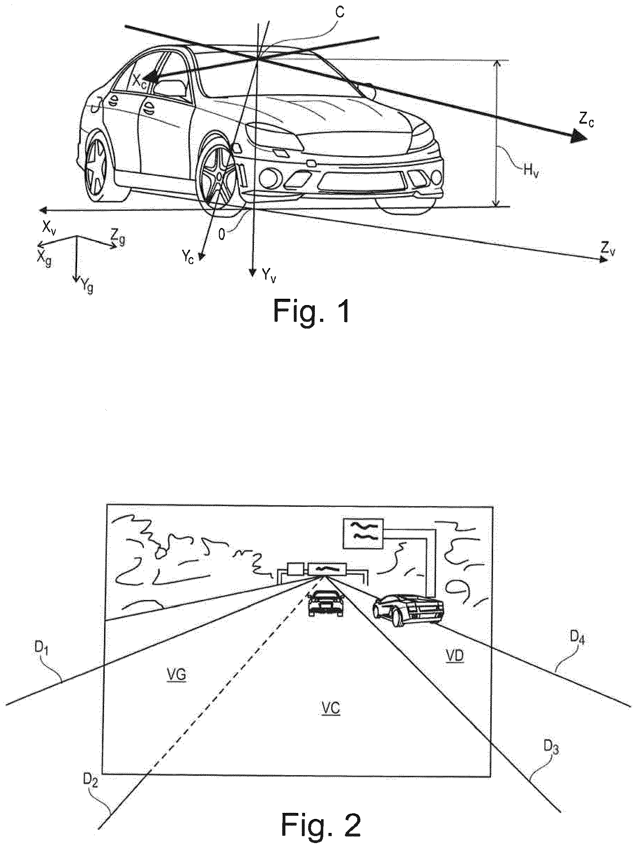

La Figure 1 illustre les différents repères utilisés pour définir la position et l'orientation de la caméra C par rapport au véhicule.

Il s'agit des repères suivants :

- le repère caméra $(X_c, Y_c, Z_c)$, qui correspond aux axes de la caméra, l'axe $Z_c$ étant l'axe optique et les axes $X_c$ et $Y_c$ correspondant aux axes du plan focal pour un modèle de sténopé ;
- le repère véhicule $(X_v, Y_v, Z_v)$, où l'axe $OZ_v$ correspond à l'axe longitudinal du véhicule et le plan $(OX_v, OZ_v)$ correspond au sol ; et
- le repère global $(X_g, Y_g, Z_g)$ basé sur la route, l'axe $Z_g$ correspondant à l'axe de la route.

L'objectif de la calibration est de déterminer la rotation qui existe entre le repère véhicule et le repère caméra.

Soit un point quelconque. Si l'on appelle $P_v$ ses coordonnées dans le repère véhicule et $P_c$ celles dans le repère caméra, on a :

$$P_c = \begin{bmatrix} X_c \\ Y_c \\ Z_c \end{bmatrix} = R \times \left( \begin{bmatrix} X_v \\ Y_v \\ Z_v \end{bmatrix} + T \right) = R \times (P_v + T)$$

où $T$ est la translation entre les centres O et C des deux repères. Par définition du repère véhicule, on a :

$$T = \begin{bmatrix} 0 & -H_v & 0 \end{bmatrix}^T$$

où $H_v$ est la distance de la caméra au point O dans le repère véhicule (hauteur).

On peut également écrire :

$$R = Rot_X \times Rot_Y \times Rot_Z$$

avec :

$$Rot_X = \begin{bmatrix} 1 & 0 & 0 \\ 0 & \cos(a_X) & \sin(a_X) \\ 0 & -\sin(a_X) & \cos(a_X) \end{bmatrix} \quad Rot_Y = \begin{bmatrix} \cos(a_Y) & 0 & \sin(a_Y) \\ 0 & 1 & 0 \\ -\sin(a_Y) & 0 & \cos(a_Y) \end{bmatrix} \quad Rot_Z = \begin{bmatrix} \cos(a_Z) & \sin(a_Z) & 0 \\ -\sin(a_Z) & \cos(a_Z) & 0 \\ 0 & 0 & 1 \end{bmatrix}$$

$a_x$, $a_y$, et $a_z$ correspondant respectivement aux angles de tangage, lacet et roulis.

La Figure 2 illustre un exemple de scène captée par la caméra, montrant des marquages au sol délimitant des voies de circulation, avec dans cet exemple une voie centrale VC, une voie de droite VD et une voie de gauche VG. Ces voies sont définies dans l'image par des droites $D_1 ... D_4$ correspondant à la trace dans l'image recueillie par la caméra des marquages au sol délimitant ces voies de circulation, marquages qui seront par la suite appelés "bords".

Plus généralement, on notera $D_k$ les bords de voies obtenus sur une image, et $\{(D_k)_i\}$ la liste des bords obtenus sur une séquence d'images consécutives.

On notera $R_e$ l'estimation de la rotation. À partir de cette estimation, on peut facilement calculer la position des bords dans l'image d'une caméra virtuelle en rotation $R_e$ par rapport à la caméra. On notera $\hat{D}_k$ ces bords, ou bords corrigés. On notera $\{(\hat{D}_k)_i\}$ la liste des bords corrigés pour une séquence d'images.

L'extraction des bords, c'est-à-dire la détermination des paramètres définissant les droites $D_k$ dans l'image,

est effectuée par une technique d'analyse d'image conventionnelle, par exemple par détection de contours (qui transforment l'image en un tableau de valeurs binaires auquel est appliqué une technique de calcul des gradients), puis exécution d'une transformation de Hough, qui est une technique bien connue (dont le principe est notamment exposé dans le US 3 069 654 A) permettant de détecter et de caractériser très rapidement des droites dans une image numérisée.

Dans le cas d'images présentant une distorsion (c'est-à-dire où les traces des bords ne seraient pas rectilignes dans l'image brute captée par la caméra), cette distorsion sera corrigée avant de procéder à la détection des bords, ces derniers étant supposés rectilignes.

*Algorithme de calibration automatique selon l'invention*

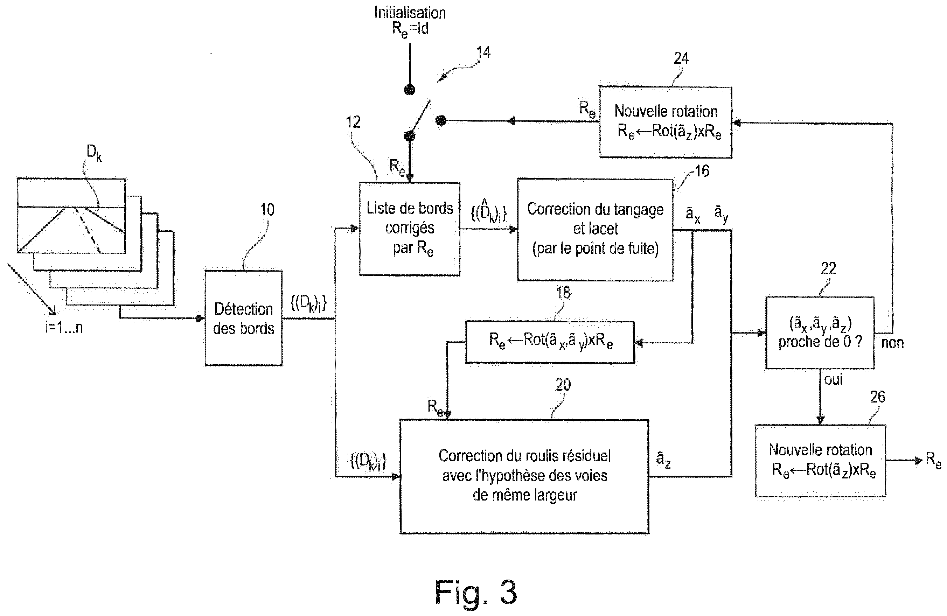

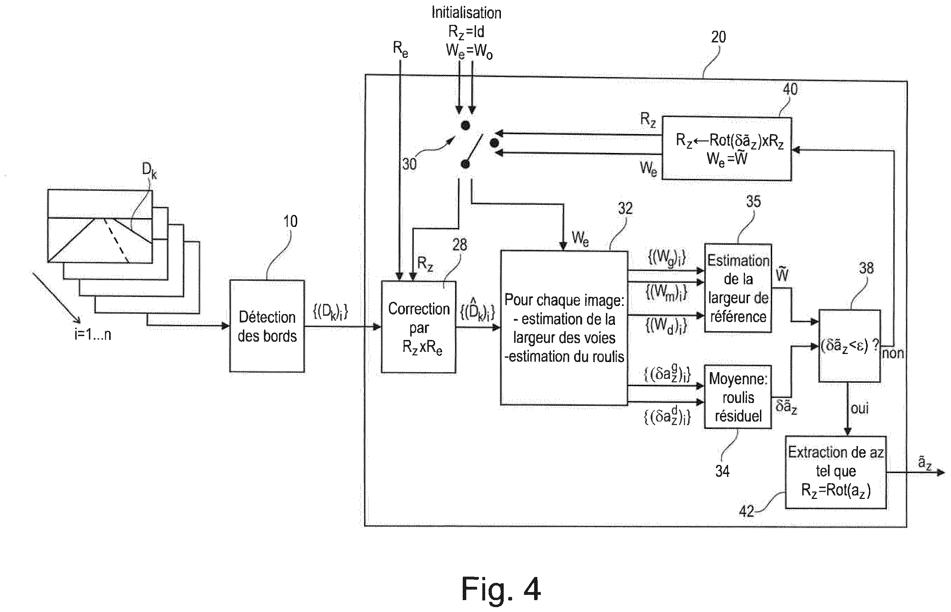

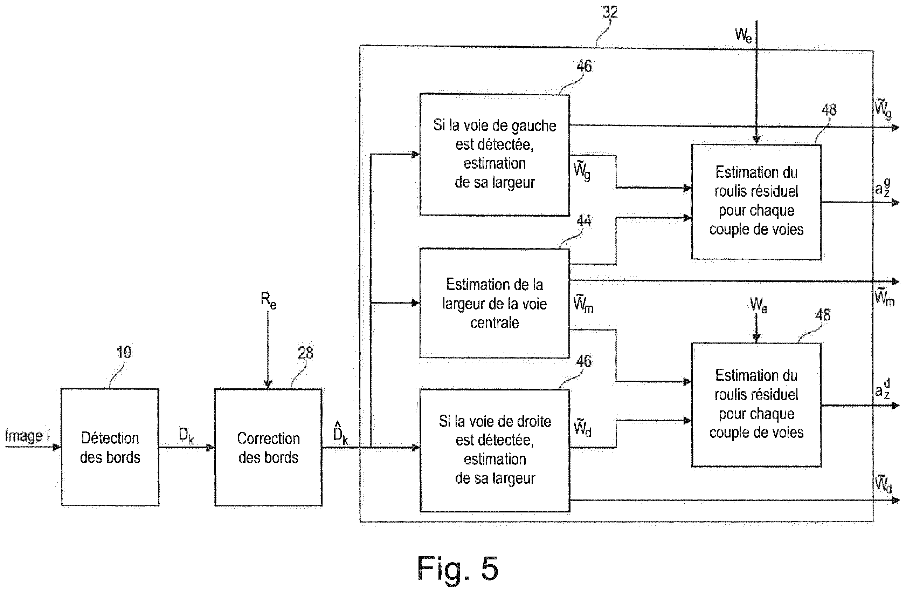

On va décrire en référence au schéma général de la Figure 3 (dont certaines parties seront explicitées plus en détail par les Figures 4 et 5) le mode opératoire du procédé de calibration de l'invention, permettant de caractériser la position angulaire de la caméra par rapport au véhicule, c'est-à-dire de déterminer les angles respectifs $a_x$, $a_y$, et $a_z$ de tangage, de lacet et de roulis définis plus haut.

Les schémas des Figures 3 à 5 sont des représentations par blocs fonctionnels illustrant les différentes étapes du processus de calibration. On notera que, bien que ces schémas soient présentés sous forme de blocs interconnectés, la mise en oeuvre des différentes fonctions est logicielle, cette représentation n'étant qu'illustrative.

Du fait de son caractère non linéaire, le procédé de l'invention met en oeuvre un algorithme itératif, cet algorithme pouvant être itéré soit sur une séquence d'images, soit sur plusieurs séquences d'images en changeant de séquence à chaque itération. Cette deuxième possibilité permet de limiter l'impact des erreurs de mesures sur une partie de la vidéo ; on obtiendra alors une première estimation des angles de tangage, roulis et lacet, estimation qui sera ensuite affinée au fur et à mesure du temps et des différentes séquences ultérieures.

On notera également que le procédé de l'invention peut permettre aussi bien une calibration initiale qu'une recalibration ultérieure par correction fine des déformations mécaniques susceptibles d'apparaitre pendant l'utilisation de la caméra, par exemple un déplacement de cette dernière sur son support en raison des vibrations subies, des variations de température, etc.

On notera enfin que le procédé de l'invention est applicable à tout type de caméra installée dans un véhicule et observant la route, qu'il s'agisse aussi bien d'une caméra située à l'avant de la voiture qu'une caméra de recul, dès lors que la scène captée comprend au moins deux voies de circulation parallèles de largeur constante.

Essentiellement, la calibration comprend les étapes suivantes :

- correction de la position des bords avec l'estimation de la rotation $R_e$ (bloc 12) ;
- estimation du tangage et du lacet résiduels (bloc 16) ;
- mise à jour de la matrice de rotation (bloc 18) ;
- estimation du roulis résiduel (bloc 20) ;
- mise à jour de la matrice de rotation (bloc 24) ;

Ces étapes sont itérées jusqu'à ce que les angles correctifs estimés par chaque module soient négligeables (test du bloc 22).

Plus précisément, un traitement de détection des bords (bloc 10) est appliqué à une séquence d'images en entrée, ce qui permet d'obtenir une liste de bords $\{(D_k)_i\}$.

Cette liste de bords est corrigée (bloc 12) par application d'une rotation $R_e$ qui est l'estimée, pour l'itération courante, de la rotation recherchée. Initialement, cette estimée $R_e$ est initialisée par la matrice identité *Id*, comme cela est schématisé par le commutateur 14.

À partir de la liste de bords corrigés $\{(\hat{D}_{k)i}\}$, l'algorithme estime (bloc 16) les angles de tangage et de lacet résiduels $\tilde{a}_x, \tilde{a}_y$ correspondant au signal d'erreur de l'algorithme itératif selon ces deux composantes.

Cette estimation opérée par le bloc 16 est effectuée avantageusement par la méthode du point de fuite, qui est une méthode en elle-même bien connue : essentiellement, on considère le point de fuite dans l'image, qui est l'intersection de tous les bords $D_k$ de la route dans l'image. Si l'on désigne $(u_{VP}, v_{VP})$ les coordonnées de ce point de fuite dans l'image et *f* la longueur focale de la caméra, si le véhicule est parfaitement aligné avec la route le repère global $(X_g, Y_g, Z_g)$ lié au sol et le repère $(X_v, Y_v, Z_v)$ lié au véhicule sont identiques, et l'on obtient les résultats suivants :

$$u_{VP} = \frac{\tan(a_Y)}{\cos(a_x)} \times f$$

$$v_{VP} = \tan(a_X) \times f$$

quel que soit l'angle de roulis $a_Z$.

On peut ainsi obtenir les angles $a_X$ de tangage et $a_Y$ de lacet.

En pratique, le véhicule n'est jamais parfaitement aligné avec l'axe de la route, de sorte que les équations précédentes ne sont plus exactes. Pour compenser ce fait, on utilise une séquence d'images suffisamment longue pour que le véhicule soit considéré comme globalement aligné sur la route sur la durée de cette séquence et on calcule le point d'intersection des bords pour chaque image, puis on réalise une moyenne de tous les points d'intersection ainsi calculés, de manière à définir le point de fuite dont les coordonnées permettront ensuite d'estimer le tangage et le lacet.

L'étape suivante (bloc 18) consiste à mettre à jour la matrice de rotation $R_e$ en appliquant à la valeur $R_e$ de la précédente itération une rotation de compensation par les valeurs de tangage et de lacet résiduelles déterminées par le bloc 16 : $R_e \leftarrow Rot(\tilde{a}_x, \tilde{a}_y) \times R_e$.

La matrice de rotation $R_e$ ainsi corrigée est ensuite appliquée à un module (bloc 20) d'estimation du roulis résiduel $\tilde{a}_z$, mettant en oeuvre un algorithme lui-même itératif dont le détail sera exposé plus bas en référence aux Figures 4 et 5.

Les valeurs de tangage, lacet et roulis résiduelles $\tilde{a}_x, \tilde{a}_y$ c et $\tilde{a}_z$, qui constituent le signal d'erreur de la boucle, sont testées (bloc 22) et l'algorithme est itéré si nécessaire par une nouvelle mise à jour $R_e \leftarrow Rot(\tilde{a}_z) \times R_e$ (bloc 24) pour opérer une correction en roulis (le tangage et le lacet ayant déjà été corrigés au niveau du bloc 18). La matrice de rotation résultante $R_e$ constituera la nouvelle valeur d'entrée de l'algorithme au bloc 12 pour l'itération suivante.

Le processus est ainsi poursuivi jusqu'à ce que les angles de tangage, lacet et roulis résiduels soient considérés comme négligeables (test du bloc 22). Si tel est le cas, cela signifie que l'algorithme a convergé, et la valeur estimée finale $R_e$ peut être alors délivrée en sortie, après application d'une dernière mise à jour $R_e \leftarrow Rot(\tilde{a}_z) \times R_e$ (bloc 26, identique au bloc 24) pour une correction en roulis par la dernière valeur $\tilde{a}_z$ précédemment déterminée.

*Module d'estimation de l'angle de roulis*

La Figure 4 illustre de façon plus détaillée la manière dont est opérée la détermination du roulis résiduel $\tilde{a}_z$ par le bloc 20 de la Figure 3.

Le procédé est basé sur le principe suivant : pour une image donnée, on estime la largeur des voies visibles sur l'image (voie centrale, et voies gauche et/ou droite qui ont été détectées) : on pourra estimer le roulis en utilisant la différence entre les largeurs estimées et la largeur réelle des voies.

On notera $R_Z$ la rotation due au roulis et $W_e$ l'estimation de la largeur de référence des voies, qui n'est pas connue.

Afin de converger vers une estimation correcte du roulis et de la largeur réelle, l'algorithme réalise plusieurs itérations. À chaque itération, on utilise l'estimation $R_Z$ précédente pour corriger les bords, puis on estime l'angle de roulis résiduel $\delta a_Z$.

L'algorithme a pour entrées :

- une séquence d'images, sur lesquelles le module de détection de bords (bloc 10) est appliqué. On obtient la liste des bords $\{(D_k)_i\}$ ;
- une matrice de correction $R_e$ qui provient du module de correction du tangage et du lacet (bloc 16 de la Figure 3), et éventuellement des itérations précédentes de l'ensemble de l'algorithme ;
- une initialisation (schématisée par le commutateur 30) de la largeur de référence de la route, par exemple $W_e = 3$ m et de l'estimation de la rotation due au roulis : $R_Z = Id$.

Les étapes suivantes sont itérées jusqu'à ce que le roulis résiduel $\delta a_Z$ soit suffisamment faible (test du bloc 38) :

- correction des bords avec $R_Z \times R_e$ pour corriger le tangage, le lacet et une partie du roulis (bloc 28) ;
- Pour chaque image : estimation des largeurs et du roulis pour chaque paire de voies (bloc 32, dont le détail sera décrit plus bas en référence à la Figure 5) ;
- moyenne des angles sur toute la séquence, donnant le roulis résiduel $\delta a_Z$ (bloc 34) ;
- estimation de la nouvelle largeur $\tilde{W}$ à partir des largeurs estimées pendant toute la séquence (bloc 36) ;
- mise à jour de $R_Z$ (bloc 40).

En ce qui concerne plus précisément l'étape d'estimation de la largeur de référence (bloc 36), pour estimer la largeur réelle des voies on utilise toute la séquence d'images, sur laquelle on calcule les largeurs (par image) des voies de droite, de gauche et centrale. On calcule ensuite la moyenne des largeurs par type de voie, et on utilise la largeur minimale obtenue : l'utilisation de cette valeur minimale permet de limiter les risques que le facteur sous la racine soit négatif.

Dans la séquence d'images, le module ne détecte pas toujours plusieurs voies. Lorsque sur une image seule la voie centrale est détectée, on utilisera tout de même l'estimation de sa largeur pour estimer la largeur de référence, mais on ne pourra pas calculer d'estimation du roulis pour cette image.

Au moment du calcul de la moyenne des roulis par image, on vérifie qu'il y a eu suffisamment d'images pour lesquelles plusieurs voies ont été détectées.

Au fur et à mesure des itérations, l'estimation de la largeur réelle des voies converge (test du bloc 38).

L'algorithme s'achève alors par extraction (bloc 42) de la valeur de l'angle $a_z$ tel que $R_Z=Rot(a_z)$, permettant de mesurer l'importance de la correction en roulis.

*Module d'estimation de la largeur des voies et du roulis résiduel*

La Figure 5 illustre plus en détail les opérations exécutées par le bloc 32 de la Figure 4.

Pour une image donnée, l'estimation est opérée de la manière suivante :

- détection des bords de l'image $D_k$ (bloc 10), le module détectant éventuellement une voie à droite ou à gauche en plus de la voie centrale ;
- correction de la rotation estimée, en particulier pour corriger le lacet et le tangage (bloc 28, de la Figure 4) ;
- estimation de la largeur de chaque voie visible : voie centrale (bloc 44) et voies de droite et/ou de gauche (blocs 46) si celles-ci sont visibles sur l'image de la caméra ;
- pour chaque couple de voies : estimation du roulis résiduel (bloc 48).

Si trois voies sont détectées, on estime la largeur de chaque voie $\tilde{w}_g$, $\tilde{w}_m$, $\tilde{w}_d$ et deux angles de correction du roulis $a_z^g$ et $a_z^d$. Si seulement deux voies sont détectées, alors on estime un seul angle de correction du roulis. Si seule la voie centrale est détectée, on estime sa largeur, mais pas de roulis.

Plus précisément, l'estimation de la largeur d'une voie (blocs 44, 46) utilise les équations des droites des bords des voies, équations données pour chaque image par le module de détection des bords 10. Plus précisément, une voie est définie par deux bords, à gauche et à droite, avec les équations suivantes :

$$D_{gauche}: u=a_1 v+b_1 \qquad\qquad D_{droite}: u=a_2 v+b_2$$

À partir de ces bords, la largeur peut être estimée par :

$$\tilde{w}=H_v \cos(\alpha)(a_2-a_1)$$

où $\alpha$ représente l'angle entre le véhicule et la route et Hv la hauteur de la caméra.

Si la hauteur $H_v$ de la caméra par rapport au sol, est connue, cette valeur peut être utilisée utilement pour calculer l'angle de roulis ; dans le cas contraire, il est possible de prendre une valeur arbitraire quelconque, par exemple $H_v$ = 1 m qui sera ensuite éliminée lors des itérations de l'algorithme. En effet, les estimations de la largeur de chaque voie ($\tilde{w}_g$, $\tilde{w}_m$, $\tilde{w}_d$) sont proportionnelles à $H_v$. Mais comme $W_e$ est estimé à partir de ces mesures, $W_e$ est aussi proportionnel à $H_v$ et $a_z$ ne dépend donc pas de $H_v$. Le seul impact de $H_v$ est lors de l'initialisation de $W_e$ : si $H_v$ est inconnu, il suffit de lui donner une valeur probable et cohérente avec l'initialisation de $W_e$, de sorte qu'il n'est pas nécessaire de connaître la hauteur véritable de la caméra.

Comme $b1=b2=f \tan(\alpha)$, on peut estimer $\alpha$ pour chaque image par :

$$\tan(\alpha)=\frac{b_1+b_2}{2f}$$

La formule précédente pour estimer la largeur d'une voie est valable seulement si les bords sont corrigés parfaitement. Lorsqu'il reste une rotation partielle, ce n'est qu'une estimation de la largeur, mais grâce aux itérations cette estimation convergera vers le bon résultat.

Ce calcul est valable pour la voie centrale comme pour les voies de droite et de gauche.

En ce qui concerne l'estimation du roulis résiduel pour chaque couple de voies, on dispose de la détection de deux voies parallèles, par exemple voie centrale et voie de gauche. Les largeurs des voies $\tilde{w}_g$ et $\tilde{w}_m$ ayant été estimées

sur chaque image et W représentant la largeur de référence des voies, on démontre que l'on peut calculer le roulis $a_z$ par application de l'expression suivante :

$$a_z \simeq \left( -1 \pm \sqrt{1 + \frac{W}{\tilde{w}_g} - \frac{W}{\tilde{w}_m}} \right) \times \frac{\cos(\alpha) H_v}{W}$$

Cette relation est une approximation au premier ordre, valable lorsque $a_z$ est petit. $H_v$ est la hauteur de la caméra par rapport au sol, et $\alpha$ qui représente l'angle entre le véhicule et la route est estimé à partir des équations des bords des voies.

La même formule est appliquée pour le couple de voies droite et centrale.

## Revendications

**1.**   Un procédé de calibration angulaire de la position d'une caméra video embarquée dans un véhicule automobile, par estimation d'une matrice de calibration ($R_e$) définissant une rotation entre un repère lié à la caméra ($X_c$, $Y_c$, $Z_c$) et un repère lié au véhicule ($X_v$, $Y_v$, $Z_v$), cette rotation étant définie en termes d'angles de tangage ($a_x$), de lacet ($a_y$) et de roulis ($a_z$),

procédé comprenant, pendant une phase de déplacement du véhicule sur une route, des étapes de :

a) capture d'une séquence d'images video d'une scène de la route, chaque image de la séquence comprenant une pluralité de traces d'intérêt représentatives de marquages au sol de voies de circulation parallèles ; et

b) détection de bords (10) dans les images video, pour l'obtention d'une liste de bords ($D_k$) rectilignes correspondant, dans chaque image, auxdites traces d'intérêt,

c) correction (12) de la liste de bords par application à chaque bord d'une rotation selon l'estimée de la matrice de calibration ;

d) calcul (16) d'angles de tangage et de lacet résiduels par une méthode de détection du point de fuite appliqué à la liste de bords corrigée obtenue à l'étape c) ;

e) mise à jour (18) de l'estimée de la matrice de calibration par application d'une rotation selon les angles de tangage et de lacet résiduels calculés à l'étape d) ;

procédé **caractérisé en ce qu'**il comprend en outre les étapes successives suivantes :

f) calcul (20 ; 28, 32, 34, 36) d'un angle de roulis résiduel à partir de la liste de bords corrigée obtenue à l'étape c) et de l'estimée de la matrice de calibration obtenue à l'étape e), par :

• estimation des largeurs respectives d'au moins deux voies de circulation à partir de la liste de bords ;
• comparaison des largeurs respectives ainsi estimées et calcul d'au moins une différence de largeur entre voies ; et
• calcul de l'angle de roulis en fonction de ladite différence de largeur ainsi calculée, les largeurs réelles des voies étant supposées identiques ;

g) mise à jour (40) de l'estimée de la matrice de calibration par application d'une rotation selon l'angle de roulis résiduel calculé à l'étape f) ; et

h) itération, sur au moins une séquence d'images, des étapes c) à g) jusqu'à ce que les angles de tangage, de lacet et de roulis résiduels soient inférieurs à un seuil prédéterminé.

**2.**   Le procédé de la revendication 1, dans lequel l'étape f) d'estimation de l'angle de roulis comprend les étapes successives suivantes :

f1) correction (28) de la liste de bords par application à chaque bord d'une rotation selon l'estimée de la matrice de calibration et d'une rotation selon l'estimée d'une matrice de roulis ;

f2) pour chaque image, à partir de la liste de bords obtenue à l'étape f1) et en fonction d'une référence de largeur de voie (We) :

• calcul (32) de la largeur de chacune des voies de circulation détectée dans l'image, et

• calcul (32) d'un angle de roulis résiduel pour chaque couple de voies de circulation détecté dans l'image ;

f3) pour la séquence d'images, calcul (36) d'une largeur moyenne en fonction des largeurs de voie estimées à l'étape f2) pour les différentes images de la séquence ;

f4) pour la séquence d'images, calcul (34) d'un angle de roulis résiduel moyen à partir des angles de roulis résiduels calculés à l'étape f2) pour les différentes images de la séquence ;

f5) mise à jour (40) :

• de la matrice de roulis par application d'une rotation selon l'angle de roulis résiduel moyen calculé à l'étape f4), et

• de la largeur de référence moyenne par la largeur moyenne calculée à l'étape f3) ;

f6) itération des étapes f1) à f5) jusqu'à ce que l'angle de roulis résiduel soit inférieur à un seuil prédéterminé ; et

f7) extraction d'un angle de roulis estimé à partir de la matrice de roulis.

3. Le procédé de la revendication 2, dans lequel l'étape f2) de calcul de la largeur de chacune des voies de circulation et de l'angle de roulis pour chaque couple de voies de circulation comprend :

- en cas de détection dans l'image courante de plus de deux voies de circulation, la délivrance en sortie de trois valeurs de largeur de voie et de deux valeurs d'angle de roulis résiduel ;

- en cas de détection dans l'image courante de deux voies de circulation, la délivrance en sortie seulement de deux valeurs de largeur de voie et d'une valeur d'angle de roulis ;

- en cas de détection dans l'image courante d'une seule voie de circulation, la délivrance en sortie seulement d'une valeur de largeur de voie.

4. Le procédé de la revendication 2, dans lequel à l'étape f2) l'estimation de la largeur de chacune des voies de circulation comprend l'application de la relation :

$$\tilde{w} = H_v \cos(\alpha)(a_2 - a_1)$$

$\tilde{W}$ étant l'estimée de la largeur de la voie,

$H_v$ étant la hauteur de la caméra par rapport au sol,

$\alpha$ étant l'angle du véhicule par rapport à l'axe de la voie sur lequel il circule, et

$a_1$ et $a_2$ étant les coefficients directeurs des bords délimitant la voie de circulation dans l'image.

5. Le procédé de la revendication 2, dans lequel à l'étape f2) l'estimation de l'angle de roulis comprend l'application de la relation :

$$a_z \simeq \left( -1 \pm \sqrt{1 + \frac{W}{\tilde{w}_g} - \frac{W}{\tilde{w}_m}} \right) \times \frac{\cos(\alpha) H_v}{W}$$

$W$ étant la référence de largeur de voie ou son estimation,

$\tilde{W}_g$ et $\tilde{W}_m$ étant les estimées de largeur de voies du couple de voies considéré,

$\alpha$ étant l'angle du véhicule par rapport à l'axe de la voie sur lequel il circule, et

$H_v$ étant la hauteur de la caméra par rapport au sol.

**Patentansprüche**

1. Verfahren zur Winkelkalibrierung der Position einer an Bord eines Kraftfahrzeugs befindlichen Videokamera durch Schätzen einer Kalibrierungsmatrix (Re), die eine Rotation definiert zwischen einem Bezugssystem, das mit der Kamera verbunden ist, $(X_c, Y_c, Z_c)$ und einem Bezugssystem, das mit dem Fahrzeug verbunden ist, $(X_v, Y_v, Z_v)$, wobei diese Rotation im Hinblick auf den Nickwinkel $(a_x)$, den Gierwinkel $(a_y)$ und den Rollwinkel $(a_z)$ definiert ist, wobei das Verfahren, während einer Phase der Bewegung des Fahrzeugs auf einer Straße, die folgenden Schritte umfasst:

a) Aufnehmen einer Sequenz von Videobildern einer Szene der Straße, wobei jedes Bild der Sequenz eine Mehrzahl von Orten von Interesse umfasst, die für Markierungen am Boden von parallelen Verkehrswegen repräsentativ sind; und

b) Erkennen von Rändern (10) in den Videobildern zum Erhalten einer Liste von geradlinigen Rändern ($D_k$), die in jedem Bild den Orten von Interesse entsprechen;

c) Korrigieren (12) der Ränderliste durch Anwendung auf jeden Rand einer Rotation gemäß der Schätzung der Kalibrierungsmatrix;

d) Berechnen (16) von Restnick- und -gierwinkeln durch ein Verfahren zum Erkennen des Fluchtpunktes, der auf die korrigierte, in Schritt c) erhaltene Ränderliste angewendet wird;

e) Aktualisieren (18) der Schätzung der Kalibrierungsmatrix durch Anwendung einer Rotation gemäß den in Schritt d) berechneten Restnick- und gierwinkeln;

wobei das Verfahren **dadurch gekennzeichnet ist, dass** es ferner die folgenden aufeinander folgenden Schritte umfasst:

f) Berechnen (20; 28, 32, 34, 36) eines Restrollwinkels ausgehend von der korrigierten, in Schritt c) erhaltenen Ränderliste und der in Schritt e) erhaltenen Schätzung der Kalibrierungsmatrix durch:

• Schätzen der jeweiligen Breiten von mindestens zwei Verkehrswegen ausgehend von der Ränderliste;
• Vergleichen der jeweiligen, auf diese Weise geschätzten Breiten und Berechnen mindestens einer Breitendifferenz zwischen Wegen; und
• Berechnen des Rollwinkels in Abhängigkeit von der auf diese Weise berechneten Breitendifferenz, wobei die tatsächlichen Breiten der Wege als identisch angenommen werden;

g) Aktualisieren (40) der Schätzung der Kalibrierungsmatrix durch Anwendung einer Rotation gemäß dem in Schritt f) berechneten Restrollwinkel; und

h) Wiederholen, bei mindestens einer Bildsequenz, der Schritte c) bis g), bis die Restnick-, gier- und rollwinkel kleiner als ein vorbestimmter Schwellwert sind.

2. Verfahren nach Anspruch 1, bei dem der Schritt f) zum Schätzen des Rollwinkels die folgenden aufeinander folgenden Schritte umfasst:

f1) Korrigieren (28) der Ränderliste durch Anwendung auf jeden Rand einer Rotation gemäß der Schätzung der Kalibrierungsmatrix und einer Rotation gemäß der Schätzung einer Rollmatrix;

f2) für jedes Bild, ausgehend von der in Schritt f1) erhaltenen Ränderliste und in Abhängigkeit von einer Wegebreitenreferenz (We):

• Berechnen (32) der Breite jedes der in dem Bild erkannten Verkehrswege und
• Berechnen (32) eines Restrollwinkels für jedes in dem Bild erkannte Verkehrswegepaar;

f3) für die Bildsequenz Berechnen (36) einer gemittelten Breite in Abhängigkeit von den in Schritt f2) geschätzten Wegebreiten für die unterschiedlichen Bilder der Sequenz;

f4) für die Bildsequenz Berechnen (34) eines gemittelten Restrollwinkels ausgehend von den in Schritt f2) berechneten Restrollwinkeln für die unterschiedlichen Bilder der Sequenz;

f5) Aktualisieren (40):

• der Rollmatrix durch Anwendung einer Rotation gemäß dem in Schritt f4) berechneten gemittelten Restrollwinkel; und
• der gemittelten Referenzbreite durch die in Schritt f3) berechnete gemittelte Breite;

f6) Wiederholen der Schritte f1) bis f5), bis der Restrollwinkel kleiner als ein vorbestimmter Schwellwert ist; und
f7) Extrahieren eines geschätzten Rollwinkels aus der Rollmatrix.

3. Verfahren nach Anspruch 2, bei dem der Schritt f2) zum Berechnen der Breite jedes der Verkehrswege und des Rollwinkels für jedes Verkehrswegepaar Folgendes umfasst:

- für den Fall der Erkennung in dem aktuellen Bild von mehr als zwei Verkehrswegen, Bereitstellen am Ausgang von drei Werten für die Wegebreite und von zwei Werten für den Restrollwinkel;
- für den Fall der Erkennung in dem aktuellen Bild von zwei Verkehrswegen, Bereitstellen am Ausgang von nur zwei Werten für die Wegebreite und von einem Wert für den Restrollwinkel;
- für den Fall der Erkennung in dem aktuellen Bild von nur einem Verkehrsweg, Bereitstellen am Ausgang von nur einem Wert für die Wegebreite.

4. Verfahren nach Anspruch 2, bei dem in Schritt f2) das Schätzen der Breite jedes der Verkehrswege die Anwendung der folgenden Relation umfasst:

$$\tilde{w} = H_v \cos(\alpha)(a_2 - a_1)$$

wobei $\tilde{W}$ die Schätzung der Breite des Weges ist,
$H_v$ die Höhe der Kamera relativ zum Boden ist,
$\alpha$ der Winkel des Fahrzeugs relativ zu der Achse des Weges ist, auf dem es fährt, und
$a_1$ und $a_2$ die Steigung der Ränder sind, die den Verkehrsweg in dem Bild begrenzen.

5. Verfahren nach Anspruch 2, bei dem in Schritt f2) das Schätzen des Rollwinkels die Anwendung der folgenden Relation umfasst:

$$a_z \simeq \left( -1 \pm \sqrt{1 + \frac{W}{\tilde{w}_g} - \frac{W}{\tilde{w}_m}} \right) \times \frac{\cos(\alpha) H_v}{W}$$

wobei W die Referenz der Wegebreite oder deren Schätzung ist,
$\tilde{w}_g$ und $\tilde{w}_m$ die Schätzungen der Wegebreite des betrachteten Wegepaares sind,
$\alpha$ der Winkel des Fahrzeugs relativ zu der Achse des Weges ist, auf dem es fährt, und
$H_v$ die Höhe der Kamera relativ zum Boden ist.

**Claims**

1. A method of angular calibration of the position of a video camera on board a motor vehicle, by estimating a calibration matrix ($R_e$) defining a rotation between a reference system linked to the camera ($X_c$, $Y_c$, $Z_c$) and a reference system linked to the vehicle ($X_v$, $Y_v$, $Z_v$), said rotation being defined in terms of pitch ($a_x$), yaw ($a_y$) and roll ($a_z$) angles, the method comprising, during a phase of displacement of the vehicle on a road, the steps of:

   a) capturing a sequence of video images of a scene of the road, each image of the sequence comprising a plurality of traces of interest representative of road markings of parallel circulation lanes; and
   b) detecting edges (10) in the video images, for obtaining a list of rectilinear edges ($D_k$) corresponding, in each image, to said traces of interest,
   c) correcting (12) the list of edges by applying to each edge a rotation according to the calibration matrix estimate;
   d) calculating (16) residual pitch and yaw angles by a method of detection of the vanishing point applied to the corrected list of edges obtained at step c);
   e) updating (18) the calibration matrix estimate by applying a rotation according to the residual pitch and yaw angles calculated at step d);

   the method being **characterized in that** it further comprises the following successive steps:

   f) calculating (20; 28, 32, 34, 36) a residual roll angle based on the corrected list of edges obtained at step c) and on the calibration matrix estimate obtained at step e), by:

      • estimating the respective widths of at least two circulation lanes based on the list of edges;
      • comparing the so-estimated respective widths and calculating at least one difference of width between lanes; and
      • calculating the roll angle as a function of said so-calculated width difference, the real widths of the lanes being supposed to be identical to each other;

g) updating (40) the estimate of the calibration matrix by applying a rotation according to the residual roll angle calculated at step f); and

h) iterating, over at least a sequence of images, steps c) to g) until the residual pitch, yaw and roll angles are lower than a predetermined threshold.

2. The method according to claim 1, wherein step f) of estimating the roll angle comprises the following successive steps:

f1) correcting (28) the list of edges by applying to each edge a rotation according the calibration matrix estimate and a rotation according to a roll matrix estimate;

f2) for each image, based on the list of edges obtained at step f1) and as a function of a reference of lane width (We):

• calculating (32) the width of each of the circulation lanes detected in the image, and
• calculating (32) a residual roll angle for each couple of circulation detected in the image;

f3) for the sequence of images, calculating (36) a mean width as a function of the lane widths estimated at step f2) for the different images of the sequence;

f4) for the sequence of images, calculating (34) a mean residual roll angle based on the residual roll angles calculated at step f2) for the different images of the sequence;

f5) updating (40):

• the roll matrix by applying a rotation according to the mean residual roll angle calculated at step f4), and
• the mean reference width by the mean width calculated at step f3);

f6) iterating steps f1) to f5) until the residual roll angle is lower than a predetermined threshold; and

f6) extracting an estimated roll angle based on the roll matrix.

3. The method according to claim 2, wherein step f2) of calculating the width of each of the circulation lanes and the roll angle for each couple of circulation lanes comprises:

- in case of detection in the current image of more than two circulation lanes, outputting three values of lane width and two values of residual roll angle;
- in case of detection in the current image of two circulation lanes, outputting only two values of lane width and one value of roll angle;
- in case of detection in the current image of a single circulation lane, outputting only one value of lane width.

4. The method according to claim 2, wherein, at step f2), estimating the width of each of the circulation lanes comprises applying the relation:

$$\tilde{w} = H_v \, cos(\alpha)(a_2 - a_1)$$

where:

$\tilde{w}$ is the estimate of the lane width,
$H_v$ is the height of the camera with respect to the ground,
$\alpha$ is the angle of the vehicle with respect to the axis of the lane on which it circulates, and
$a_1$ and $a_2$ are the direction coefficients of the edges delimiting the circulation lane in the image.

5. The method according to claim 2, wherein, at step f2), estimating the roll angle comprises applying the relation:

$$a_z = \left( -1 \pm \sqrt{1 + \frac{W}{\tilde{w}_g} - \frac{W}{\tilde{w}_m}} \right) \times \frac{cos(\alpha) H_v}{W}$$

where:

W is the lane width reference or the estimate thereof,
$\tilde{w}_g$ and $\tilde{w}_m$ are the lane width estimates of the considered couple of lanes,
$\alpha$ is the angle of the vehicle with respect to the axis of the lane on which it circulates, and
$H_v$ is the height of the camera with respect to the ground.

Fig. 1

Fig. 2

Fig. 3

Fig. 4

EP 2 884 226 B1

Fig. 5

**EP 2 884 226 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2874300 A1
- US 20110228181 A1
- US 20090290032 A1
- US 3069654 A